# EUROPÄISCHE PATENTSCHRIFT

(11) **EP 3 680 537 B1**
(45) Veröffentlichungstag und Bekanntmachung des Hinweises auf die Patenterteilung: **09.02.2022**
(21) Anmeldenummer: 19219912.3
(22) Anmeldetag: 27.12.2019
(51) Int. Cl.: F16L 41/14, F16L 41/00, E03F 3/04

(54) **ANSCHLUSSVORRICHTUNG MIT KIPPGELENK**
CONNECTION DEVICE WITH BENDING JOINT
DISPOSITIF DE RACCORDEMENT POURVU D'ARTICULATION DE PIVOTEMENT

(30) Priorität: 09.01.2019 DE 202019100076 U
(43) Veröffentlichungstag der Anmeldung: 15.07.2020
(73) Patentinhaber: Funke Kunststoffe GmbH, 59071 Hamm-Uentrop (DE)
(72) Erfinder: Funke, Norbert, 48324 Sendenhorst (DE); Funke, Hans Guenter, 48324 Sendenhorst (DE)
(74) Vertreter: Habbel, Ludwig

(56) Entgegenhaltungen:
- EP-A1- 1 548 349
- DE-U1-202017 101 503
- KR-A- 20080 075 433

## Beschreibung

Die Erfindung betrifft eine Anschlussvorrichtung nach dem Oberbegriff des Anspruchs 1.

Aus der DE 20 2017 101 503 U1 ist eine gattungsgemäße Anschlussvorrichtung bekannt. Sie weist einen Distanzring auf, der entlang seinem Umfang wellenförmig verläuft, um seitlich an ein Hauptrohr angelegt werden zu können, welches einen kreisrunden Querschnitt aufweist.

Aus der KR 2008 0075433 A ist eine Anschlussvorrichtung bekannt, die es ermöglichen soll, die Öffnung im Hauptrohr nicht als Bohrung mit einem kreisrunden Querschnitt auszuführen, sondern mit einer Säge zu erzeugen. Die Öffnung im Hauptrohr ist nicht kreisrund ausgeführt, sondern weist in Umfangsrichtung des Hauptrohrs geringere Abmessungen auf als in Längsrichtung, so dass ein vergleichsweiser großer Öffnungsquerschnitt geschaffen werden kann, ohne die Struktur des Hauptrohrs zu schwächen, wie dies bei einer kreisrunden Bohrung mit einer gleich großen Querschnittsfläche der Fall wäre.

Aus der EP 1 548 349 A1 ist eine Anschlussvorrichtung bekannt, die es ermöglicht, das Spitzende eines Seitenrohrs in unterschiedlichen Winkelstellungen an die Anschlussvorrichtung anzuschließen. Hierzu weist die Anschlussvorrichtung ein Aufnahmestück auf, das ähnlich wie eine Muffe das Spitzende des Seitenrohrs aufnehmen kann. Das Aufnahmestück ist in Art eines Kugelgelenks in der Anschlussvorrichtung beweglich, so dass es in unterschiedlichen Winkelstellungen ausgerichtet werden kann.

In der Praxis tritt immer wieder das Problem auf, ein neues Seitenrohr an ein bereits vorhandenes Hauptrohr anzuschließen, beispielsweise wenn im Rahmen eines Neubaus das Gebäude an eine vorhandene Kanalisation angeschlossen werden soll. Zum Anschluss an kreisrunde Kanalrohre, die eine gleichmäßige Wandstärke aufweisen, hat sich die gattungsgemäße Anschlussvorrichtung bewährt. Probleme können allerdings auftreten, wenn die Bohrungen, die zum Anschluss des Seitenrohrs in das Hauptrohr eingebracht werden, nicht rechtwinklig bzw. zentrisch ausgeführt werden. Denn bereits bei relativ geringen Abweichungen von der gedachten Mittelachse der Bohrung zu der gedachten Mittelachse des Hauptohrs kann das Problem auftreten, dass die Dichtung sich nicht optimal innen an die Wand des Hauptrohrs anlegt. Ähnliche Schwierigkeiten können ohnehin bei solchen Hauptrohren auftreten, deren Außen- und / oder Innenkontur vom Kreisrund abweicht. Dies betrifft beispielsweise Hauptrohre, die eine kreisrunde Innenkontur, aber keine gleichmäßige Wandstärke aufweisen, also beispielsweise ein Hauptrohr mit Fuß, ein scheitelverstärktes Hauptrohr und dergleichen.

Dies betrifft auch Hauptrohre, welche keine kreisrunde Innenkontur, sondern beispielsweise einen Ei-förmigen Querschnitt aufweisen: derartige Hauptrohre sind in ihrem oberen Umfangsbereich kreisbogenförmig ausgestaltet, sodass dort der Anschluss eines Seitenrohrs mit der bekannten Anschlussvorrichtung möglich ist. Im unteren Umfangsbereich jedoch weichen diese Hauptrohre von der Kreisform ab, sodass die bekannten Anschlussvorrichtungen nicht genutzt werden können oder zumindest die Gefahr besteht, dass ein damit hergestellter Anschluss nicht dauerhaft dicht ist. Die Bohrungen, die in kreisrunde Hauptrohre oder auch in den oberen Umfangsbereich eines Ei-Rohrs eingebracht werden, um ein Seitenrohr anzuschließen, werden als Anschlussbohrungen bezeichnet und sind im Idealfall jeweils als Radialbohrung ausgeführt.

In der Praxis kann allerdings die Erfordernis auftreten, gegebenenfalls Seitenrohre unterhalb der 3-Uhr und 9-Uhr Positionen an das Hauptrohr anschließen zu müssen, also unterhalb von dessen Äquator. Auch wenn die Bohrungen in den unteren Bereich eines Ei-Rohrs eingebracht werden, gegebenenfalls in unterschiedlichen Höhen bei Hauptrohren mit Ei-Querschnitt, oder wenn versehentlich bzw. aufgrund räumlicher Beeinträchtigungen das Bohrwerkzeug nicht exakt radial ausgerichtet werden kann, werden die Anschlussbohrungen nicht als Radialbohrungen ausgeführt.

Ähnliche Problemstellungen können sich bei dem Anschluss von Seitenrohren an die Hauptrohre ergeben, die als Ei-Rohre ausgestaltet sind: Die geometrischen Verhältnisse bei Ei-Rohren desselben Herstellers, jedoch mit unterschiedlichen Nenndurchmessern, sind zwangsläufig unterschiedlich. Hinzu kommt, dass die geometrischen Verhältnisse bei Ei-Rohren unterschiedlicher Hersteller auch bei gleichen Nenndurchmessern unterschiedlich sein können. Im Ergebnis führt dies dazu, dass eine sehr große Vielzahl unterschiedlich ausgestalteter Anschlussvorrichtungen erforderlich wäre, um Seitenrohre eines bestimmten Nenndurchmessers in den jeweils unterschiedlichen vorgefundenen Situationen an das jeweilige Hauptrohr mit Ei-Querschnitt anschließen zu können. Und diese Vielzahl vervielfältigt sich weiter aufgrund der unterschiedlichen Nenndurchmesser, welche die anzuschließenden Seitenrohre aufweisen können. Es ist nämlich darauf zu achten, dass der Anschluss des Seitenrohrs bis in das Innere des Hauptrohrs hinein stets mit einem Fließgefälle erfolgt, sodass dementsprechend die unterschiedlichen Montagesituationen unterschiedliche Anschlussvorrichtungen erfordern.

Der Erfindung liegt die Aufgabe zugrunde, eine gattungsgemäße Anschlussvorrichtung dahingehend zu verbessern, dass diese einen fehler- bzw. winkeltoleranten Anschluss eines Seitenrohrs an Hauptrohre unterschiedlicher Geometrien ermöglicht.

Diese Aufgabe wird durch eine Anschlussvorrichtung nach Anspruch 1 gelöst. Vorteilhafte Ausgestaltungen sind in den Unteransprüchen beschrieben.

Die Erfindung schlägt mit anderen Worten vor, ein Kipplager zu verwenden, dessen Kippachse quer zur Längsachse des Grundkörpers verläuft. Der Grundkörper dient dazu, ein Kragenrohr der Anschlussvorrichtung kippbeweglich zu lagern. Das Kragenrohr weist den Kragen der Anschlussvorrichtung auf, der von innen dem Hauptrohr angelegt wird. Auf diese Weise kann dieselbe Anschlussvorrichtung aufgrund unterschiedlicher Ausrichtungen des Kragenrohrs die Funktionalität mehrerer unterschiedlich ausgestalteter Anschlussvorrichtungen bewirken. Vorteilhaft können zugunsten eine besonders stabilen Führung des Kragenrohrs zwei Kipplager verwendet werden, die beiderseits des Kragenrohrs angeordnet sind und gemeinsam die Kippachse schaffen, welche quer zur Längsachse des Grundkörpers verläuft.

Bei der Montage wird der Grundkörper so in das Hauptrohr eingesetzt, dass die Kippachse horizontal ausgerichtet ist. Auf diese Weise kann das Kragenrohr um die Kippachse auf und ab geschwenkt bzw. gekippt werden. Bei ungünstigen Montagesituationen kann durch die Kippbeweglichkeit ein Toleranzausgleich erreicht werden, beispielsweise wenn die Anschlussbohrung nicht exakt wie gewünscht, z. B. exakt horizontal oder exakt radial, in das Hauptrohr eingebracht wurde.

Um die Kippbeweglichkeit des Kragenrohrs zu gewährleisten, welches im Wesentlichen in axialer Richtung des Grundkörpers verläuft und aus dieser idealen Ausrichtung nach oben und / oder nach unten gekippt werden kann, liegt das Kragenrohr dem Grundkörper nicht eng an. Vielmehr verbleibt zwischen dem Kragenrohr ein Spalt zum Grundkörper. Wo das Kragenrohr an dem Grundkörper gelagert ist, und auch wenn das Kragenrohr aufgrund einer zum Grundkörper schräg verlaufenden Ausrichtung dem Grundkörper im Abstand von dem Kipplager anliegt, ist an dieser Stelle der Spalt allerdings jeweils unterbrochen bzw. überbrückt.

Das Kipplager wird erfindungsgemäß unmittelbar durch die beiden Bauelemente geschaffen, welche relativ zueinander gekippt werden sollen, nämlich durch entsprechend ausgestaltete Abschnitte des Grundkörpers einerseits und des Kragenrohrs andererseits. Auf diese Weise können zusätzliche Bauteile vermieden werden, welche einerseits durch ihre Herstellung und andererseits auch durch die Erfordernis, diese Bauteile montieren zu müssen, Kosten verursachen. Um eine einfache Handhabung dieser beiden Bauelemente und ein stabiles Kipplager zu gewährleisten, kann vorteilhaft der eine Abschnitt - entweder des Grundkörpers oder des Kragenrohrs - als Aufnahmetasche ausgestaltet sein, während der damit zusammen wirkende andere Abschnitt als Vorsprung ausgestaltet ist, der in dieser Aufnahmetasche eingreift und in ihr schwenkbeweglich gelagert ist.

Der Abschnitt des Grundkörpers, der einen Teil des Kipplagers bildet, wird als Lagerabschnitt des Grundkörpers bezeichnet, zur Unterscheidung von dem Abschnitt des Grundkörpers, der ein Gewinde aufweist, welches zur Spannung des Distanzrings dient, und welcher dementsprechend als Gewindeabschnitt des Grundkörpers bezeichnet wird. Es kann vorgesehen sein, den Grundkörper aus zwei separaten Bauteilen herzustellen, die miteinander verklebt oder verschweißt werden. Z. B. kann der Lagerabschnitt mit seinem Bauelement des Kipplagers als Spritzguss-Formteil ausgestaltet sein, und der Gewindeabschnitt kann preisgünstig aus einem handelsüblichen Rohr hergestellt sein, das passend abgelängt und spanabhebend bearbeitet worden ist, um das Gewinde zu schaffen.

Die Verwendung zweier separater Bauteile ermöglicht es auch, auf einfache Weise den Grundkörper mit zwei unterschiedlichen Durchmessern auszugestalten. Der Lagerabschnitt kann z. B. einen geringeren Durchmesser aufweisen, so dass es innen im Kragenrohr aufgenommen werden kann und die Anschlussvorrichtung außen einen annähernd gleichen Durchmesser über ihre gesamte Länge aufweisen kann, abgestimmt auf den Durchmesser der in das Hauptrohr eingebrachten Anschlussbohrung.

Vorteilhaft kann der Rand der Aufnahmetasche zumindest bereichsweise gebogen verlaufen, und auch der Umfang des Vorsprungs kann zumindest bereichsweise gebogen verlaufen. Auf diese Weise kann eine vergleichsweise große Kontaktfläche zwischen dem Vorsprung und der Aufnahmetasche geschaffen werden, sodass das Kipplager eine hohe mechanische Belastbarkeit aufweist. Insbesondere kann dabei vorteilhaft vorgesehen sein, diese gebogen verlaufenden Flächen kreisbogenförmig auszugestalten, sodass sie einerseits optimal vollflächig aneinander anliegen und andererseits gewährleistet ist, dass die Kippachse während einer Kippbewegung nicht "wandert", sondern stets an ihrer konstruktiv vorgesehenen, definierten Position verbleibt.

Vorteilhaft kann der Kragen des Kragenrohrs mit einer elastischen Dichtung der Innenseite des Hauptrohrs anliegen. Dies dient einerseits grundsätzlich einem möglichst dichten Anschluss der Anschlussvorrichtung an das Hauptrohr und kann darüber hinaus auch gegebenenfalls im Sinne einer Fehlertoleranz geringfügige Schrägstellungen des Grundkörpers in der Radialbohrung ausgleichen, die zur Aufnahme des Grundkörpers in das Hauptrohr eingebracht worden ist, bzw. geringfügige Schrägstellungen des Kragens gegenüber der Innenfläche des Hauptrohrs ausgleichen. Zusammen mit der kippbeweglichen Lagerung des Kragenrohrs wird somit die Verwendbarkeit derselben Anschlussvorrichtung bei vielen unterschiedlichen Montagesituationen erreicht.

Auch am zweiten Ende der Anschlussvorrichtung kann vorteilhaft ermöglicht sein, dass das Seitenrohr in unterschiedlichen Winkeln an die Anschlussvorrichtung anschließen kann. Dies kann beispielsweise durch ein Anschlusselement erreicht werden, welches in der Praxis als "Kugeladapter" bekannt ist. Hierzu ist vorgesehen, dass der Grundkörper im Bereich des zweiten Endes der Anschlussvorrichtung nicht ausschließlich in Art eines zylindrischen Rohrabschnitts verläuft, sondern vielmehr einen Abschnitt aufweist, in welchem die Rohrbehandlung kugelsegmentartig verläuft. In diesem Kugelsegment-Abschnitt ist ein Rohraufnahmering taumelbeweglich gehalten, indem er gegenüber der Längsachse des Grundkörpers in sämtlichen 360°-Richtungen um einige Winkelgrade gekippt werden kann. Dieser Rohraufnahmering ist ähnlich wie das Muffenende des Seitenrohrs ausgestaltet, so dass er ein Spitzende des Seitenrohrs aufnehmen kann.

Die geometrische Kippachse kann aufgrund einer geeigneten Formgebung des Kipplagers, beispielsweise von kreisbogenförmigen Konturbereichen von das Kipplager bildenden Vorsprüngen und Aufnahmetaschen, in einer Entfernung von dem Kipplager selbst liegen, also wo sich die Vorsprünge die Aufnahmetaschen befinden. So kann bewirkt werden, dass die Kippachse nahe dem vorderen Ende der Anschlussvorrichtung liegt. Auf diese Weise können mittels der Kippbewegungen unterschiedliche Winkelstellungen des Kragens erreicht werden, ohne dass der Kragen dabei unerwünscht große Bewegungen in axialer Richtung der Anschlussvorrichtung ausführt.

Durch die Kippbeweglichkeit wird eine Winkeltoleranz beim Anschluss des Seitenrohrs an das Hauptrohr gewährleistet. Diese Winkeltoleranz kann genutzt werden, um die Anschlussvorrichtung bei Hauptrohren unterschiedlicher Geometrien verwenden zu können, insbesondere wenn die Hauptrohre eine Innenkontur und / oder eine Außenkontur aufweisen, die vom Kreisrund abweicht. Die Winkeltoleranz stellt aber auch eine Fehlertoleranz dar, beispielsweise bei Hauptrohren, die sowohl eine kreisrunde Innenkontur als auch eine kreisrunde Außenkontur aufweisen, bei denen die zum Anschluss des Seitenrohrs dienende Bohrung jedoch nicht ideal eingebracht worden ist, so dass die Mittelachse der Bohrung nicht auf die Mittelachse des Hauptohres trifft. Der vorliegende Vorschlag wird nachfolgend anhand eines rein beispielhaft erwähnten Hauptrohrs erläutert, welches als so genanntes Ei-Rohr ausgestaltet ist, ohne jedoch auf die Verwendung der Anschlussvorrichtung ausschließlich bei Ei-Rohren beschränkt zu sein.

Vorteilhaft kann im Distanzring eine Bohrung angeordnet sein, die den Distanzring in radialer Richtung durchsetzt und es ermöglicht, von außen eine fließfähige Dichtmasse einzuführen, die sich innerhalb der Anschlussbohrung in dem Spalt verteilt, der sich zwischen dem Grundkörper der Anschlussvorrichtung und dem Hauptrohr ergibt, und die somit eine zuverlässige Abdichtung der Anschlussvorrichtung gegen das Hauptrohr unterstützt.

Vorteilhaft kann der Distanzring einen radial nach außen ragenden Anschlag aufweisen und sich zumindest in seinem unteren Bereich über den Anschlag hinaus mit einem Fortsatz in Richtung des ersten Endes erstrecken. Während der Anschlag die Verspannung der Anschlussvorrichtung und somit eine möglichst dichte Anlage des Kragens an die Innenseite des Hauptrohrs ermöglicht, bietet der Fortsatz eine Stützwirkung im Inneren der Anschlussbohrung und verhindert, dass der Gewindeabschnitt des Grundkörpers unerwünscht abkippt, wenn die Anschlussvorrichtung gespannt wird.

Vorteilhaft kann unabhängig von der Verwirklichung des oben genannten Fortsatz der erwähnte, radial nach außen ragende Anschlag als umlaufender Kragen am Distanzring oder als Absatz in der Wandstärke des Distanzrings ausgestaltet sein, also einstückig als integraler Bestandteil des Distanzrings ausgestaltet sein. Die Montage eines separaten Elements wird dadurch nicht erforderlich.

Wenn der Distanzring den erwähnten, radial nach außen ragenden Anschlag aufweist, kann vorteilhaft kann auf der Vorderseite des Anschlags, also auf der zum ersten Ende weisenden Seite vor dem Anschlag, ein so genannter Ausgleichskragen angeordnet sein, der zum Ausgleich von Toleranzen dient. Aufgrund unterschiedlicher Ausgestaltungen der Hauptrohre, oder bei der Montage der Anschlussvorrichtung in unterschiedlichen Höhenlagen von Ei-Rohren, wird in der Praxis regelmäßig das Problem auftreten, dass ein ringförmig umlaufender Anschlag oder mehrere, am Umfang des Distanzrings verteilt angeordnete Anschläge über die Höhe der Anschlussvorrichtung gesehen unterschiedliche Abstände zum Hauptrohr aufweisen werden. Der Ausgleichskragen erstreckt sich vom oberen Scheitelbereich des Distanzrings beiderseits nach unten und besteht aus einem elastisch verformbaren Material, so dass er durch bereichsweise unterschiedliche Komprimierung die erwähnten unterschiedlichen Abstände zum Hauptrohr ausgleichen kann.

Vorteilhaft kann ein solcher Ausgleichskragen eine von oben nach unten abnehmende Materialstärke in axialer Richtung der Anschlussvorrichtung aufweisen, da insbesondere für die Verwendung der Anschlussvorrichtung bei Ei-Rohren häufig oben ein größerer Abstand zwischen Anschlag und Hauptrohr vorliegen wird als am unteren Umfangsbereich des Distanzrings.

Ein Ausführungsbeispiel der Erfindung wird anhand der rein schematischen Darstellungen nachfolgend näher erläutert. Dabei zeigt
- Fig. 1: eine lediglich teilweise dargestellte Anschlussvorrichtung an einem ersten Beispiel eines Ei-Rohrs,
- Fig. 2: die Anschlussvorrichtung von Fig. 1 an einem zweiten Beispiel eines Ei-Rohrs,
- Fig. 3: einen Vertikalschnitt durch die Anschlussvorrichtung der Fig. 1 und 2 in detaillierterer Darstellung,
- Fig. 4: einen Horizontalschnitt durch die Anschlussvorrichtung von Fig. 3 und die
- Fig. 5 und 6: Vertikalschnitte ähnlich Fig. 3 durch dieselbe Anschlussvorrichtung, mit unterschiedlichen Kippstellungen eines Kipprohrs.

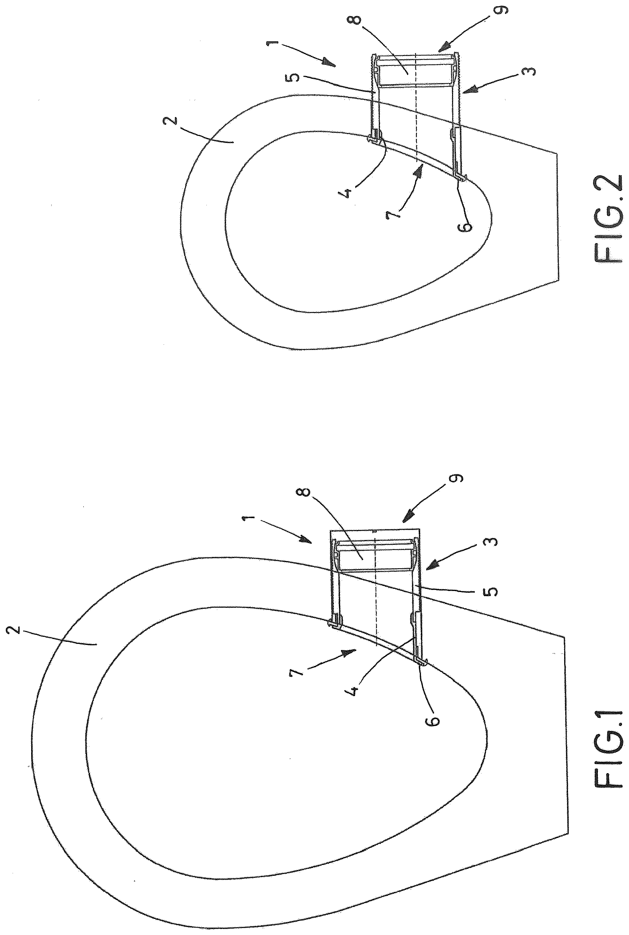

In den Zeichnungen ist jeweils eine Anschlussvorrichtung 1 an einem Ei-Rohr 2 montiert dargestellt. Das Ei-Rohr 2 stellt ein Hauptrohr dar, an welches ein Seitenrohr mittels der Anschlussvorrichtung 1 angeschlossen werden soll. Hierzu ist eine annähernd radial verlaufende Bohrung in das Ei-Rohr 2 eingebracht worden, und die Anschlussvorrichtung 1 ist in diese Bohrung eingesetzt worden. Aus dem Vergleich der Fig. 1 und 2 wird deutlich, dass die gleiche Anschlussvorrichtung 1 an unterschiedlich großen Ei-Rohren 2 verwendet werden kann. Aufgrund der unterschiedlichen Größe der Ei-Rohre 2 ergeben sich unterschiedliche Höhenlagen, in denen die Anschlussvorrichtung 1 montiert werden muss.

Die Anschlussvorrichtung 1 weist einen Grundkörper 3 auf, der zwei zugfest miteinander verbundene Elemente aufweist, nämlich einen Lagerabschnitt 4, der ein später noch näher erläutertes Lager bildet, und einen Gewindeabschnitt 5, der mit einem Außengewinde versehen ist und mit dem Lagerabschnitt 4 verklebt ist. Ein Kragen 6 bildet ein erstes Ende 7 der Anschlussvorrichtung 1, welches sich innerhalb des Ei-Rohrs 2 befindet, während der Gewindeabschnitt 5 das gegenüberliegende zweite Ende 9 der Anschlussvorrichtung 1 bildet und einen Rohraufnahmering 8 taumelbeweglich aufnimmt, um an dem zweiten Ende 9 einen winkelbeweglichen Anschluss des erwähnten Seitenrohrs an die Anschlussvorrichtung 1 zu ermöglichen.

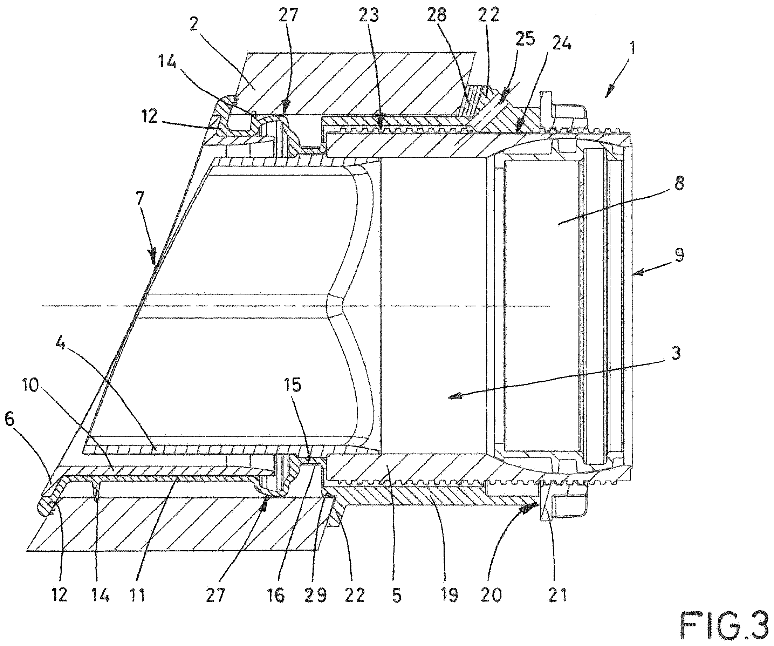

Während die Fig. 1 und 2 die Ausgestaltung der Anschlussvorrichtung 1 stark vereinfacht zeigen, ist diese aus den Fig. 3 bis 6 detaillierter ersichtlich:
Der Gewindeabschnitt 5 ist im Wesentlichen zylindrisch ausgestaltet. Der Lagerabschnitt 4 hingegen ist unten länger als oben ausgestaltet, wobei der schräge Verlauf des Lagerabschnitts 4 nahe dem ersten Ende 7 eine Art Mittelwert darstellt und eine ungefähre Annäherung an den jeweiligen schrägen Verlauf der Innenseite unterschiedlicher Hauptrohre darstellt, wie dies beispielsweise anhand der Fig. 1 und 2 für die dort ersichtlichen Ei-Rohre 2 erkennbar ist.

Eine demgegenüber genauere Anpassung der Anschlussvorrichtung 1 an den jeweiligen schrägen Verlauf des Hauptrohrs dort, wo die Anschlussvorrichtung 1 an dem Hauptrohr montiert wird, erfolgt dadurch, dass der Kragen 6 ebenfalls schräg ausgerichtet ist zudem von einem kippbeweglich gelagerten Kragenrohr 10 gebildet ist, so dass der Verlauf des Kragens 6 an den schrägen Verlauf der Innenseite des Ei-Rohrs 2 mittels dieser Kippbeweglichkeit angepasst werden kann. Bei Verwendung gleicher Gewindeabschnitte 5 kann dementsprechend in Art eines Systembaukastens durch unterschiedliche Lagerabschnitte 4 und unterschiedlicher Kragenrohre 10 die Herstellung unterschiedlicher Anschlussvorrichtungen 1 für unterschiedliche Typen von Hauptrohren ermöglicht werden.

Das Kragenrohr 10 ist innerhalb einer Dichtungsmanschette 11 angeordnet die erstens auf der Rückseite des Kragens 6 einen Dichtkragen 12 bildet. Zweitens bildet sie in geringem Abstand hinter dem Dichtkragen 12 eine umlaufende Dichtlippe 14, welche sich von innen abdichtend an den Rand der Bohrung anlegt. Drittens bildet die Dichtungsmanschette 11 einen Halteabschnitt 15, mit welchem sie dem Lagerabschnitt 4 des Grundkörpers 3 anliegt. Mittels einer Spannschelle 16 ist sichergestellt, dass der Halteabschnitt 15 sowohl ortsfest auf dem Lagerabschnitt 4 festgelegt ist als auch gegenüber dem Lagerabschnitt abgedichtet ist. Schließlich weist die Dichtungsmanschette 11 zwischen der Dichtlippe 14 und dem Halteabschnitt 15 eine als Dehnungsbalg 27 bezeichnete umlaufende Ausbuchtung auf, die einen Dehnungsabschnitt der Dichtungsmanschette 11 bildet und eine ungehinderte Kippbeweglichkeit des Kragenrohrs 10 ermöglicht.

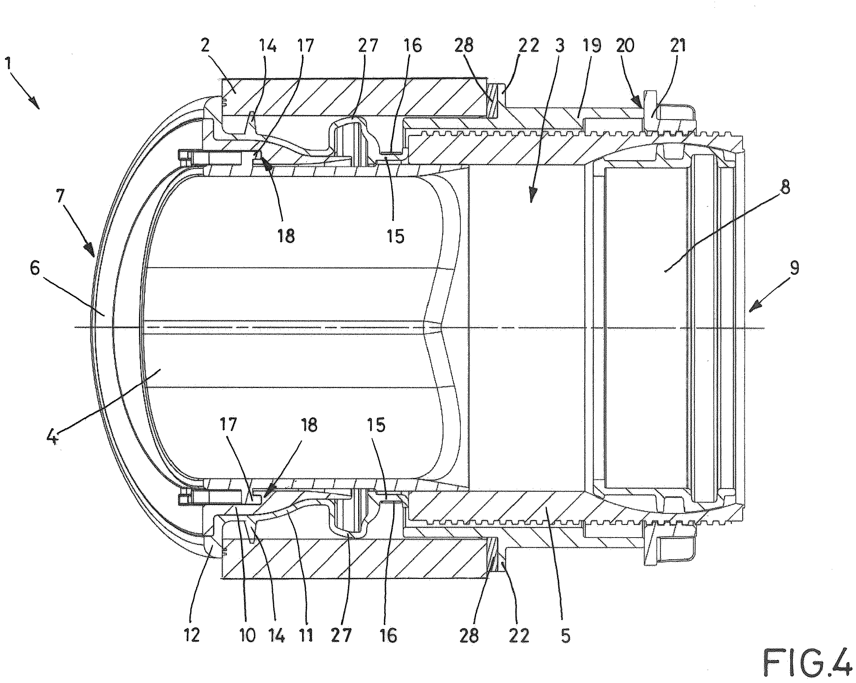

Weiterhin ist in den Fig. 3 bis 6 jeweils auch ein elastisch verformbaren Ausgleichskragen 28 dargestellt, der bei dem dargestellten Ausführungsbeispiel nicht als geschlossener Ring ausgestaltet ist, sondern U-förmig und nach unten hin offen. Der Ausgleichskragen 28 weist oben eine größere Materialstärke auf, ist also in axialer Richtung der Anschlussvorrichtung 1 dicker als nach unten hin, wie der Vergleich zwischen den Fig. 3 und 4 deutlich macht. Der Ausgleichskragen 28 dient zum Ausgleich von Toleranzen, z. B. je nach Höhenlage, in der die Anschlussbohrung in das Ei-Rohr 2 eingebracht ist.

Fig. 3 zeigt ähnlich wie die Fig. 1 und 2 einen vertikalen Längsschnitt durch eine in ein Ei-Rohr 2 eingebaute Anschlussvorrichtung 1.

Fig. 4 zeigt einen horizontalen Längsschnitt durch die Anschlussvorrichtung 1 der Fig. 3. Der Lagerabschnitt 4 weist zwei seitliche Vorsprünge 17 auf, die jeweils einen im Wesentlichen L-förmigen Querschnitt aufweisen und einander um 180° gegenüber liegen. Diesen Vorsprüngen 17 liegt das Kragenrohr 10 an, es bildet hierzu zwei Aufnahmetaschen 18, die jeweils einen der Vorsprünge 17 aufnehmen. Die jeweils zum zweiten Ende 9 weisende rückwärtige Kontur der Vorsprünge 17 und auch die zugehörigen Innenkonturen der Aufnahmetaschen 18 verlaufen kreisbogenförmig, so dass zwei Schwenklager geschaffen werden, die gemeinsam eine Schwenkachse bilden, um welche das Kragenrohr 10 kippbeweglich gelagert ist.

Das formschlüssige Ineinandergreifen der Vorsprünge 17 und der Aufnahmetaschen 18 bietet Stützkräfte, die einer unerwünschten Verformung des Kragenrohrs 10 entgegenwirken, wenn die Anschlussvorrichtung 1 stark gespannt wird, um hohe Anlagekräfte des Kragens 6 und des Dichtkragens 12 am Hauptrohr wie dem dargestellten Ei-Rohr 2 zu erreichen.

Weiterhin ist in den Fig. 3 und 4 ein Distanzring 19 dargestellt, der den Gewindeabschnitt 5 des Grundkörpers 3 umgibt. An seiner zum zweiten Ende 9 weisenden sogenannten Rückseite weist der Distanzring 19 eine Anlagefläche 20 auf, die quer zur Längsachse des Gewindeabschnitts 5 ausgerichtet ist. Ein Spannring 21 wirkt mit dem Außengewinde des Gewindeabschnitts 5 zusammen und liegt der Anlagefläche 20 des Distanzrings 19 an. Mittels des Spannrings 21 kann der Distanzring 19 von außen gegen die Wand des Ei-Rohrs 2 gepresst werden, um so den Lagerabschnitt 4 zu der Inneren Oberfläche des Ei-Rohrs 2 zu ziehen und somit den Kragen 6 und den Dichtkragen 12 der Dichtungsmanschette 11 von innen an die Wand des Ei-Rohrs 2 abdichtend anzulegen.

Der Distanzring 19 weist einen Anschlag 22 auf, der dem Ei-Rohr 2 außen anliegt. Dieser Anschlag 22 nimmt die Kräfte auf, wenn die Anschlussvorrichtung 1 mittels des Spannrings 21 gespannt wird, und ermöglicht es, den Kragen 6 und den Dichtkragen 12 innen gegen die Wand des Ei-Rohrs 2 zu pressen.. Der Distanzring 19 erstreckt sich mit einem Fortsatz 29, der nach vorn vor den Anschlag 22 ragt, in die Anschlussbohrung des Ei-Rohrs 2. Der Fortsatz 29 liegt innerhalb der Anschlussbohrung unten auf der Wand des Ei-Rohrs 2 auf, stützt somit den Distanzring 19 nach unten ab und verhindert auf diese Weise ein Abkippen des Distanzrings 19 nach unten, wenn die Anschlussvorrichtung 1 mittels des Spannrings 21 gespannt wird.

Bei dem dargestellten Ausführungsbeispiel ist der Anschlag 22 als Rippe ausgestaltet, die an dem Distanzring 19 radial nach außen ragt. Abweichend von dem dargestellten Ausführungsbeispiel kann der Anschlag 22 als Absatz in der Wandstärke des Distanzrings 19 ausgestaltet sein, wenn nämlich der Distanzring 19 zum ersten Ende 7 hin eine geringere Wandstärke aufweist als zum zweiten Ende 9 hin. In Fig. 3 sind oben beide Maßnahmen erkennbar, wo nämlich der Anschlag 22 sowohl durch beiderseits unterschiedliche Wandstärken des Distanzrings 19 als auch durch eine radial noch darüber hinaus nach außen ragende Rippe gebildet ist.

Aus Fig. 3 ist ersichtlich, dass im oberen Scheitelbereich des Gewindeabschnitts 5 eine Nut 23 in axialer bzw. Längsrichtung des Gewindeabschnitts 5 verläuft, welche das Außengewinde des Gewindeabschnitts 5 unterbricht. Der Distanzring 19 weist in seinem oberen Umfangsbereich eine Rippe 24 auf, die sich als Vorsprung des Distanzrings 19 in diese Nut 23 erstreckt, so dass der Distanzring 19 ausschließlich längsbeweglich auf dem Gewindeabschnitt 5 geführt ist. Auf diese Weise ist der Distanzring 19 gegen Drehbewegungen gesichert, die ansonsten durch den Spannring 21 auf den Distanzring 19 übertragen werden könnten.

Zusätzlich zu der Rippe 24 ist in Fig. 3 eine Gewindebohrung 25 dargestellt, die zur Aufnahme einer Schraube - insbesondere einer Madenschraube - dienen kann. Auch die Schraube erstreckt sich als Vorsprung des Distanzrings 19 in die Nut 23 und stellt eine Verdrehsicherung für den Distanzring 19 dar. Lediglich zu Anschauungszwecken sind beide Verdrehsicherungen in Fig. 3 gemeinsam dargestellt.

Abweichend von der Darstellung der Fig. 3 kann es ausreichend sein, nur eine dieser beiden Verdrehsicherungen oder eine anders ausgestaltete Verdrehsicherung vorzusehen, oder ggf. sogar auf eine Verdrehsicherung zu verzichten.

Da die Gewindebohrung 25 den Distanzring 19 in radialer Richtung durchsetzt, kann sie auch dazu genutzt werden, von außen eine Dichtmasse in den Spalt einzufüllen, der sich zwischen dem Gewindeabschnitt 5 und dem Distanzring 19 ergibt. Die Dichtmasse wird eingefüllt, nachdem die Anschlussvorrichtung 1 montiert und mittels des Spannrings 21 verspannt worden ist, so dass anschließend keine Kippbewegungen des Kragenrohrs 10 mehr erfolgen. Die Dichtmasse kann dann in Richtung des ersten Endes 7 bis zu dem Dehnungsbalg 27, bis zur Dichtlippe 14 oder sogar bis zum Dichtkragen 12 strömen. In Richtung des zweiten Endes 9 wird der erwähnte Spalt einerseits durch den Spannring 21 abgedichtet und andererseits durch den Anschlag 22, der sich als umlaufender Kragen nach oben hin und rings um den Gewindeabschnitt 5 fortsetzt, und der den Ausgleichskragen 28 stützt, wie Fig. 4 erkennen lässt. Abweichend von dem dargestellten Ausführungsbeispiel kann der Ausgleichskragen 28 auch als geschlossener Ring ausgestaltet sein, so dass er die Anschlussbohrung des Ei-Rohrs 2 zum zweiten Ende 9 hin, also an der Außenseite des Ei-Rohrs 2, in Art eines Dichtrings nach außen hin abdichtet.

Bei dem dargestellten Ausführungsbeispiel verlaufen die kreisbogenförmigen Konturbereiche der Vorsprünge 17 und der Aufnahmetaschen 18 im Wesentlichen aufrecht, also von oben nach unten. Dies erleichtert bei der Herstellung die Montage der einzelnen Elemente der Anschlussvorrichtung 1: unter anderem wird zunächst das Kragenrohr 10 von hinten auf den Lagerabschnitt 4 aufgeschoben, wobei die Aufnahmetaschen 18 auf die Vorsprünge 17 aufgeschoben werden. Anschließend kann der Lagerabschnitt 4 in den Gewindeabschnitt 5 eingesetzt und mit diesem verbunden werden, beispielsweise verklebt oder verschweißt werden. Abweichend von dem dargestellten Ausführungsbeispiel können die kreisbogenförmigen Bereiche auch stärker geneigt verlaufen, also eher liegend.

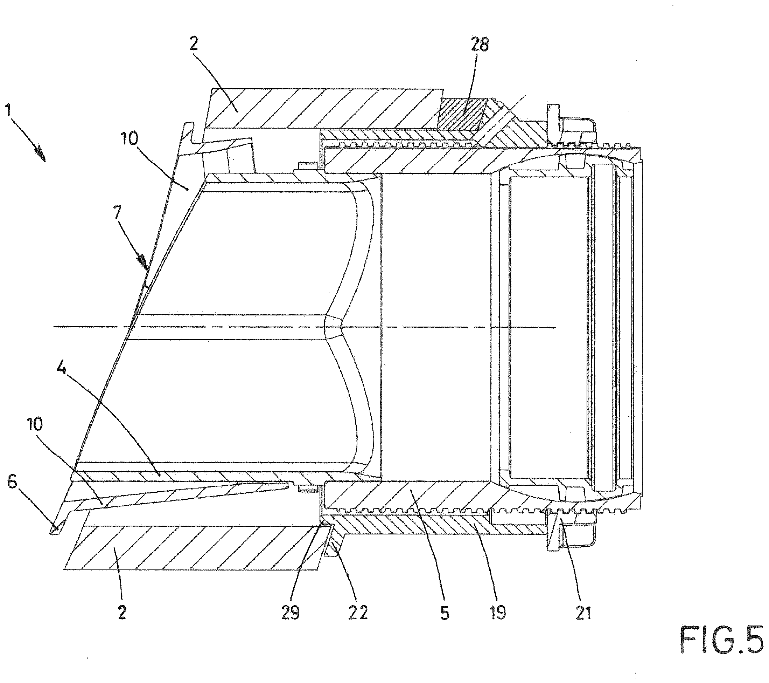

Fig. 5 zeigt dieselbe Anschlussvorrichtung 1 wie Fig. 3 und 4, in einem Vertikalschnitt wie in Fig. 3, so dass aus Übersichtlichkeitsgründen nicht sämtliche Bezugszeichen eingetragen sind. Im Unterschied zu Fig. 3 ist allerdings die Dichtungsmanschette 11 nicht dargestellt. Das Kragenrohr 10 befindet sich in einer ersten extremen Kippstellung, in welcher das vordere Ende 7 weitestmöglich nach unten gekippt ist. Die Kippbewegung des Kragenrohr 10 nach unten wird dadurch begrenzt, dass hinter der Kippachse das Kragenrohr 10 unten an den Lagerabschnitt 4 anschlägt.

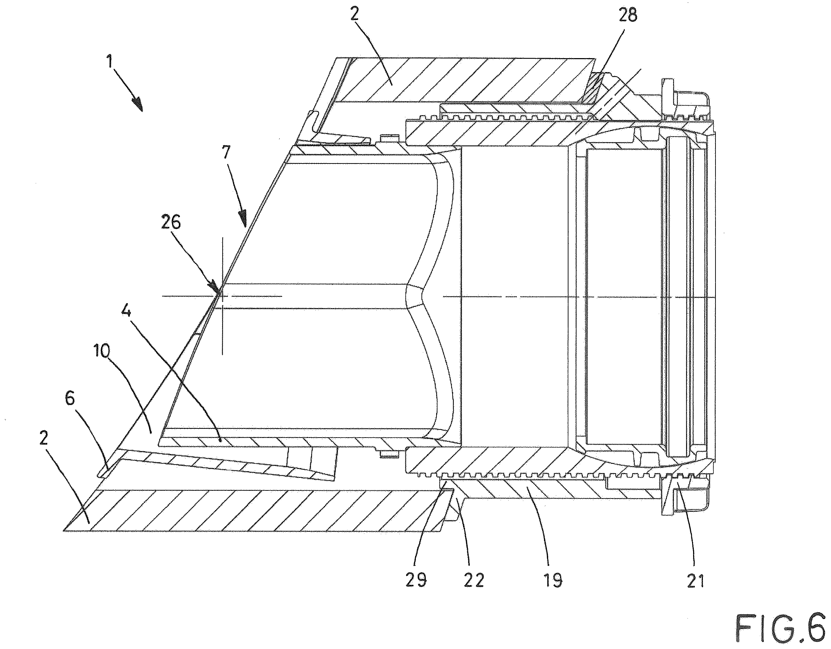

Fig. 6 zeigt, insofern vergleichbar mit Fig. 5, dieselbe Anschlussvorrichtung 1 in der entgegengesetzten, zweiten extremen Kippstellung, in welcher das vordere Ende 7 weitestmöglich nach oben gekippt ist. Hinter der Kippachse schlägt das Kragenrohr 10 oben an den Lagerabschnitt 4 an.

In Fig. 6 ist die Kippachse mit 26 gekennzeichnet. Sie befindet sich im Schnittpunkt der dort sich kreuzenden Hilfslinien. Die Formgebung der kreisbogenförmigen Konturbereiche der Vorsprünge 17 und der Aufnahmetaschen 18 bewirkt, dass die Kippachse 26 nicht im Bereich des Kipplagers selbst liegt, also wo sich die Vorsprünge 17 und die Aufnahmetaschen 18 befinden, sondern dass sie vielmehr nahe dem vorderen Ende 7 liegt, nämlich fast auf dem Schnittpunkt, den die Mittelachse des Grundkörpers 3 mit der schräg verlaufenden Vorderkante des Lagerabschnitts 4 beschreibt.

Der Vergleich der Fig. 5 und 6 zeigt, dass der Kragen 6 in Fig. 5 deutlich von der Wand des Ei-Rohrs 2 beabstandet ist, während in Fig. 6 der Kragen 6 nahe an der Wand des Ei-Rohrs 2 dargestellt ist. Aufgrund der unterschiedlichen Wandstärken der dargestellten Ei-Rohre 2 ist die Anschlussvorrichtung 1 in Fig. 6 dementsprechend gespannt, während sie in Fig. 5 noch entspannt ist, auch wenn der Spannring 21 in Fig. 5 schon weiter auf den Gewindeabschnitt 5 aufgeschraubt worden ist als in Fig. 6. Dementsprechend ist auch der elastisch verformbare Ausgleichskragen 28 in Fig. 5 weniger stark - z. B. gar nicht - komprimiert im Vergleich zu Fig. 6.

## Patentansprüche

1. Anschlussvorrichtung (1) zur Verbindung eines mit einer Anschlussbohrung versehenen Hauptrohrs mit einem Seitenrohr, mit
• einem als Rohrabschnitt ausgestalteten Grundkörper (3), der sich durch die Anschlussbohrung erstrecken kann,
• einem ersten, in das Innere des Hauptrohrs einführbaren Ende (7),
• sowie einem zweiten, an das Seitenrohr anschließbaren Ende (9), welches einen an das Seitenrohr anschließbaren Anschlussabschnitt aufweist,
• einem im Bereich des ersten Endes (7) angeordneten, dem Hauptrohr von innen anlegbaren umlaufenden Kragen (6),
• einem Distanzring (19),
der den Grundkörper (3) zirkumferent umgibt,
und der in axialer Richtung auf dem Grundkörper (3) verschiebbar ist,
• und mit einem Spannring (21),
der den Grundkörper (3) zirkumferent umgibt,
auf der vom Kragen (6) abgewandten Seite des Distanzrings (19) angeordnet ist,
und als Schraubring mit einem Gewinde des Grundkörpers (3) zusammenwirkt, derart, dass der Spannring (21) gegen den Distanzring (19) schraubbar ist,
**dadurch gekennzeichnet,**
**dass** der Grundkörper (3) im Bereich des ersten Endes (7) einen Lagerabschnitt (4) aufweist,
an welchem ein Kragenrohr (10) angeordnet ist,
welches den umlaufenden Kragen (6) aufweist,
und im Wesentlichen in axialer Richtung des Grundkörpers (3) verläuft,
wobei das Kragenrohr (10) in einem Kipplager kippbeweglich in der Art gelagert ist,
**dass** die Kippachse (26) quer zur Längsachse des Grundkörpers (3) verläuft.

2. Anschlussvorrichtung (1) nach Anspruch 1,
**dadurch gekennzeichnet,**
**dass** das Kipplager durch zusammenwirkende Abschnitte des Lagerabschnitts (4) einerseits und des Kragenrohrs (10) andererseits gebildet ist,
wobei der eine Abschnitt als Aufnahmetasche (18) ausgestaltet ist,
und der andere Abschnitt als Vorsprung (17) ausgestaltet ist,
derart, dass der Vorsprung (17) in der Aufnahmetasche (18) schwenkbar gelagert ist,
und wobei zwei Kipplager derart angeordnet sind, dass sie sich entlang dem Umfang der Anschlussvorrichtung (1) gegenüber liegen.

3. Anschlussvorrichtung (1) nach Anspruch 2,
**dadurch gekennzeichnet,**
**dass** der Rand der Aufnahmetasche (18) sowie der darin aufgenommene Umfang des Vorsprungs (17) jeweils zumindest bereichsweise gebogen verläuft.

4. Anschlussvorrichtung (1) nach Anspruch 3,
**dadurch gekennzeichnet,**
**dass** die gebogenen Bereiche der Aufnahmetasche (18) und des Vorsprungs (7) jeweils kreisbogenförmig verlaufen.

5. Anschlussvorrichtung (1) nach einem der vorhergehenden Ansprüche,
**dadurch gekennzeichnet,**
**dass** die Kippachse (26) nahe dem ersten Ende (7) der Anschlussvorrichtung (1) liegt.

6. Anschlussvorrichtung (1) nach Anspruch 5,
**dadurch gekennzeichnet,**
**dass** die Geometrie des Kipplagers in der Art gewählt ist, dass die Kippachse (26) im Abstand von dem Kipplager angeordnet ist.

7. Anschlussvorrichtung (1) nach einem der vorhergehenden Ansprüche,
**dadurch gekennzeichnet,**
**dass** der Kragen (6) auf seiner zum zweiten Ende (9) weisenden Seite mit einem elastischen Dichtkragen (12) versehen ist.

8. Anschlussvorrichtung (1) nach Anspruch 7,
**dadurch gekennzeichnet,**
**dass** der Dichtkragen (12) als Abschnitt einer Dichtungsmanschette (11) ausgestaltet ist, die mit ihrem dem Dichtkragen (12) gegenüberliegenden Ende dem Grundkörper (3) dicht anliegt.

9. Anschlussvorrichtung (1) nach einem der vorhergehenden Ansprüche,
**dadurch gekennzeichnet,**
**dass** der Grundkörper (3) einen Gewindeabschnitt (5) aufweist, der ein Außengewinde als das Gewinde aufweist, welches mit dem Spannring (21) zusammenwirkt,
und **dass** das Außengewinde durch eine Nut (23) unterbrochen ist, die sich in axialer Richtung erstreckt,
und die als Führungsnut einen Vorsprung aufnimmt, der am Distanzring (19) angeordnet ist.

10. Anschlussvorrichtung (1) nach Anspruch 9,
**dadurch gekennzeichnet,**
**dass** der Vorsprung des Distanzrings (19) als an den Distanzring (19) angeformte Rippe (24) ausgestaltet ist.

11. Anschlussvorrichtung (1) nach Anspruch 9,
**dadurch gekennzeichnet,**
**dass** der Distanzring (19) eine Gewindebohrung (25) aufweist, in welcher eine Schraube angeordnet ist, die den Vorsprung des Distanzrings (19) bildet.

12. Anschlussvorrichtung (1) nach einem der vorhergehenden Ansprüche,
**dadurch gekennzeichnet,**
**dass** im Distanzring (19) eine Bohrung angeordnet ist, die den Distanzring (19) in radialer Richtung durchsetzt.

13. Anschlussvorrichtung (1) nach einem der vorhergehenden Ansprüche,
**dadurch gekennzeichnet,**
**dass** der Distanzring (19) einen radial nach außen ragenden Anschlag (22) aufweist
und sich zumindest in seinem unteren Bereich über den Anschlag (22) hinaus mit einem Fortsatz (29) in Richtung des ersten Endes (7) erstreckt.

14. Anschlussvorrichtung (1) nach einem der vorhergehenden Ansprüche,
**dadurch gekennzeichnet,**
**dass** der Distanzring (19) einen radial nach außen ragenden Anschlag (22) aufweist,
der als umlaufender Kragen oder Absatz ausgestaltet ist.

15. Anschlussvorrichtung (1) nach einem der vorhergehenden Ansprüche,
**dadurch gekennzeichnet,**
**dass** der Distanzring (19) einen radial nach außen ragenden Anschlag (22) aufweist
und auf der zum ersten Ende (7) gerichteten Seite vor dem Anschlag (22) ein Ausgleichskragen (28) angeordnet ist, der sich vom oberen Scheitelbereich des Distanzrings (19) beiderseits nach unten erstreckt,
und aus einem elastisch verformbaren Material besteht.

16. Anschlussvorrichtung (1) nach Anspruch 15,
**dadurch gekennzeichnet,**
**dass** der Ausgleichskragen (28) eine von oben nach unten abnehmende Materialstärke in axialer Richtung der Anschlussvorrichtung (1) aufweist.

## Claims

1. Connection device (1) for connecting to a side pipe a main pipe that is provided with a connecting hole, which connection device (1) has
• a base body (3) that is designed as a pipe section and can extend through the connecting hole,
• a first end (7) that can be inserted into the inside of the main pipe
• and has a second end (9) that can be connected to the side pipe and incorporates a connecting section that can be connected to the side pipe,
• a circumferential collar piece (6) that is disposed in the area of the first end (7) and can be laid against the main pipe from inside,
• a spacer ring (19) that runs circumferentially around the base body (3) and can be shifted on the base body in an axial direction (3),
• and a clamping ring (21) that runs circumferentially around the base body (3) and is disposed on the side of the spacer ring (19) that faces away from the collar piece (6) and as a threaded ring co-acts with a screw thread of the base body (3) in such a way that the clamping ring (21) can be screwed against the spacer ring (19),
**characterised in**
**that** the base body (3) incorporates in the area of the first end (7) a bearing section (4) on which is disposed a collar pipe (10) that incorporates the circumferential collar piece (6) and extends essentially in the axial direction of the base body (3), where the collar pipe (10) is mounted tiltably in a tilting bearing in such a way that the tilting axle (26) extends transversely to the longitudinal axis of the base body (3).

2. Connection device (1) in accordance with claim 1, **characterised in that** the tilting bearing is formed by co-acting sections of the bearing section (4), on the one hand, and of the collar pipe (10), on the other, where the one section is designed as a socket (18) and the other section as a projecting part (17) in such a way that the projecting part (17) is pivotably mounted in the socket (18) and where two tilting bearings are disposed in such a way that they are positioned opposite each other on the circumference of the connection device (1).

3. Connection device (1) in accordance with claim 2, **characterised in that** the rim of the socket (18) and the circumference of the projecting part (17) held in it each extend at least partly in a curve.

4. Connection device (1) in accordance with claim 3, **characterised in that** the curved parts of the socket (18) and the projecting part (17) each extend in a circular arc.

5. Connection device (1) in accordance with any one of the foregoing claims, **characterised in that** the tilting axle (26) is arranged near to the first end (7) of the connection device (1).

6. Connection device (1) in accordance with claim 5, **characterised in that** the geometry of the tilting bearing is selected so that the tilting axle (26) is disposed at a distance from the tilting bearing.

7. Connection device (1) in accordance with any one of the foregoing claims, **characterised in that** the collar piece (6) is provided with an elastic sealing collar (12) on its side facing towards the second end (9).

8. Connection device (1) in accordance with claim 7, **characterised in that** the sealing collar (12) is designed as a section of a sealing gasket (11) that sits tightly against the base body (3) by its end opposite to the sealing collar (12).

9. Connection device (1) in accordance with any one of the foregoing claims, **characterised in that** the base body (3) incorporates a threaded section (5) that incorporates an external thread as the thread that co-acts with the clamping ring (21) and that the external thread is broken by a groove (23) that extends in an axial direction and as a guide groove receives a projecting part that is disposed on the spacer ring (19).

10. Connection device (1) in accordance with claim 9, **characterised in that** the projecting part of the spacer ring (19) is designed as a rib (24) formed on the spacer ring (19).

11. Connection device (1) in accordance with claim 9, **characterised in that** the spacer ring (19) incorporates a threaded hole (25) in which a bolt is arranged that forms the projecting part of the spacer ring (19).

12. Connection device (1) in accordance with any one of the foregoing claims, **characterised in that** a hole is disposed in the spacer ring (19) so as to run through the spacer ring (19) in a radial direction.

13. Connection device (1) in accordance with any one of the foregoing claims, **characterised in that** the spacer ring (19) incorporates a stop (22) projecting radially outwards and at least in its lower area has an extension (29) that extends over the stop (22) in the direction of the first end (7).

14. Connection device (1) in accordance with any one of the foregoing claims, **characterised in that** the spacer ring (19) incorporates a stop (22) that projects radially outwards and is designed as a circumferential collar or shoulder.

15. Connection device (1) in accordance with any one of the foregoing claims, **characterised in that** the spacer ring (19) incorporates a stop (22) that projects radially outwards and **in that** a compensation collar (28) that extends downwards on both sides from the upper apical part of the spacer ring (19) is arranged in front of the stop (22) on the side facing towards the first end (7) and is made from an elastically deformable material.

16. Connection device (1) in accordance with claim 15, **characterised in that** the material that forms the wall of the compensation collar (28) diminishes in thickness from top to bottom in the axial direction of the connection device (1).

## Revendications

1. Dispositif de raccordement (1) pour relier à un tube latéral un tube principal muni d'un alésage de raccordement, comprenant
• un corps de base (3) configuré comme segment de tube, qui peut s'étendre à travers l'alésage de raccordement,
• une première extrémité (7) pouvant être introduite à l'intérieur du tube principal,
• ainsi qu'une seconde extrémité (9) pouvant être raccordée au tube latéral, extrémité qui présente un segment de raccordement raccordable au tube latéral,
• un collet (6) périphérique, disposé dans la zone de la première extrémité (7) et applicable de l'intérieur contre le tube principal,
• une bague d'écartement (19),
qui entoure circonférentiellement le corps de base (3) et qui dans le sens axial est déplaçable sur le corps de base (3),
• et une bague de serrage (21),
qui entoure circonférentiellement le corps de base (3),
qui est disposée sur le côté de la bague d'écartement (19) ne regardant pas le col (6),
et qui en tant que bague à visser interagit avec le filetage du corps de base (3) de sorte que la bague de serrage (21) est vissable contre la bague d'écartement (19),
**caractérisé en ce**
**que** le corps de base (3), dans la zone de la première extrémité (7), présente un segment (4) de palier, contre lequel est disposé un tube (10) à collet, tube qui présente le collet (6) périphérique, et dont le tracé va essentiellement dans le sens axial du corps de base (3), sachant que le tube (10) à collet est en appui pivotant dans un palier de pivotement de sorte que l'axe de pivotement (26) a un tracé transversal à l'axe longitudinal du corps de base (3).

2. Dispositif de raccordement (1) selon la revendication 1, **caractérisé en ce que** le palier de pivotement est formé par des segments en interaction, d'une part du segment (4) de palier et d'autre part du tube (10) à collet, sachant qu'un segment est configuré en poche réceptacle (18) et que l'autre segment est configuré en saillie (17), de sorte que la saillie (17) est en appui pivotant dans la poche réceptacle (18), et sachant que deux paliers de pivotement sont disposés de sorte à se faire face, le long de la périphérie du dispositif de raccordement (1).

3. Dispositif de raccordement (1) selon la revendication 2, **caractérisé en ce que** le bord de la poche réceptacle (18) ainsi que la circonférence, logée dedans, de la saillie (17) présentent respectivement un tracé au moins localement incurvé.

4. Dispositif de raccordement (1) selon la revendication 3, **caractérisé en ce que** les zones incurvées de la poche réceptacle (18) et de la saillie (7) présentent un tracé respectivement en arc de cercle.

5. Dispositif de raccordement (1) selon l'une des revendications précédentes, **caractérisé en ce que** l'axe de pivotement (26) se situe près de la première extrémité (7) du dispositif de raccordement (1).

6. Dispositif de raccordement (1) selon la revendication 5, **caractérisé en ce que** la géométrie du palier de pivotement est choisie de sorte que l'axe de pivotement (26) est disposé à distance du palier de pivotement.

7. Dispositif de raccordement (1) selon l'une des revendications précédentes, **caractérisé en ce que** le collet (6), sur sont côté regardant la deuxième extrémité (9), est muni d'un collet d'étanchéité (12) élastique.

8. Dispositif de raccordement (1) selon la revendication 7, **caractérisé en ce que** le collet d'étanchéité (12) est configuré comme segment d'une manchette (11) de joint qui, par son extrémité située en face du collet d'étanchéité (12), applique de façon étanche contre le corps de base (3).

9. Dispositif de raccordement (1) selon l'une des revendications précédentes, **caractérisé en ce que** le corps de base (3) présente un segment fileté (5) présentant un filetage extérieur qui, en tant que filetage, interagit avec la bague de serrage (21), et **en ce que** le filetage extérieur est interrompu par une gorge (23) s'étendant dans le sens axial et qui en tant que gorge de guidage reçoit une saillie disposée contre la bague d'écartement (19).

10. Dispositif de raccordement (1) selon la revendication 9, **caractérisé en ce que** la saillie de la bague d'écartement (19) est configurée en nervure (24) modelée contre la bague d'écartement (19).

11. Dispositif de raccordement (1) selon la revendication 9, **caractérisé en ce que** la bague d'écartement (19) présente un alésage taraudé (25) dans lequel est disposée une vis formant la saillie de la bague d'écartement (19).

12. Dispositif de raccordement (1) selon l'une des revendications précédentes, **caractérisé en ce que** dans la bague d'écartement (19) est disposé un alésage qui traverse la bague d'écartement (19) dans le sens radial.

13. Dispositif de raccordement (1) selon l'une des revendications précédentes, **caractérisé en ce que** la bague d'écartement (19) présente une butée (22) faisant saillie radialement vers l'extérieur et qu'elle s'étend, au moins dans sa zone inférieure, au-delà de la butée (22) au moyen d'un appendice (29) en direction de la première extrémité (7).

14. Dispositif de raccordement (1) selon l'une des revendications précédentes, **caractérisé en ce que** la bague d'écartement (19) présente une butée (22) faisant saillie radialement vers l'extérieur et qui est configurée comme collet ou épaulement périphérique.

15. Dispositif de raccordement (1) selon l'une des revendications précédentes, **caractérisé en ce que** la bague d'écartement (19) présente une butée (22) faisant saillie radialement vers l'extérieur et qu'est disposé, sur le côté regardant la première extrémité (7), devant la butée (22), un collet de compensation (28) qui s'étend vers le bas des deux côtés de la zone supérieure de crête de la bague d'écartement (19), et qui se compose d'un matériau déformable élastiquement.

16. Dispositif de raccordement (1) selon la revendication 15, **caractérisé en ce que** le collet de compensation (28) présente une épaisseur de matériau qui va en diminuant de haut en bas dans le sens axial du dispositif de raccordement (1).
